# EUROPEAN PATENT SPECIFICATION

(11) **EP 0 341 185 B1**
(45) Date of publication and mention of the grant of the patent: **19.10.1994**
(21) Application number: 89600004.9
(22) Date of filing: 21.03.1989
(51) Int. Cl.: F24D 3/00

(54) **Water heaters and boilers for central heating combustion gases**
Wassererhitzer und Kessel für das Rauchgas einer Zentralheizung
Réchauffeur d'eau et chaudières pour des fumées de chauffage central

(30) Priority: 27.04.1988 GR 88010276
(43) Date of publication of application: 08.11.1989
(73) Proprietor: Samoilis, Nicholas Gr., GR-34003 Kimi Evias (GR)
(72) Inventor: Samoilis, Nicholas Gr., GR-34003 Kimi Evias (GR)

(56) References cited:
- DE-A- 3 340 023
- DE-U- 8 634 915
- FR-A- 1 149 092
- NL-A- 8 200 030

## Description

The present invention relates to water heater and boiler construction for the exploitation of combustion gas prooduced by central heating installations as known for example from FR-A-1 149 092

Electric water heaters offer hot water cosuming electrical.
power:moreover, they have quite a few disadvantages, such as the following :
- High electrical power consumption
- Low resistance of the appliance (boiler) in its use
- Electrocution danger
- Ordinary boilers consume too much energy thus indirectly contributing to the increase of atmosphere pollution
- The temperature of the water drops and losses take place : moreover, the boiler is not convenient for industrial use as it cannot produce steam.
- The cost of electrical water heaters is never redeemed : on the contrary, they turn out expensive because of their need to be renewed in short periods due to their low resistance.

The advantages offered by the invention as specified in claim 1 are that :
- The use of the combustion gas heat, as a result of their loss in the atmosphere from the central heating. boiler, leads to the elimination of electrical power to be consumed
   during wintertime for the production of hot water in the water heater for domestic and industrial use.
- According to laboratory testing, the overall reduction of the pollutants in the atmosphere, rises between 70 - 80% whereas the rate of the pollutants in fume rises to 100%.
- The energy save in the central heating boiler with a heating loss of 10% in the combustion gas, raises to 24-25%.
- Electrocution cases, commonly taking place in ordinary water heaters, are entirely avoided due to their not using electrical energy in the hot water production.

The redemption of the relatively high cost of the construction of the water heater in question is made in a short time (ca. 3-5 years).

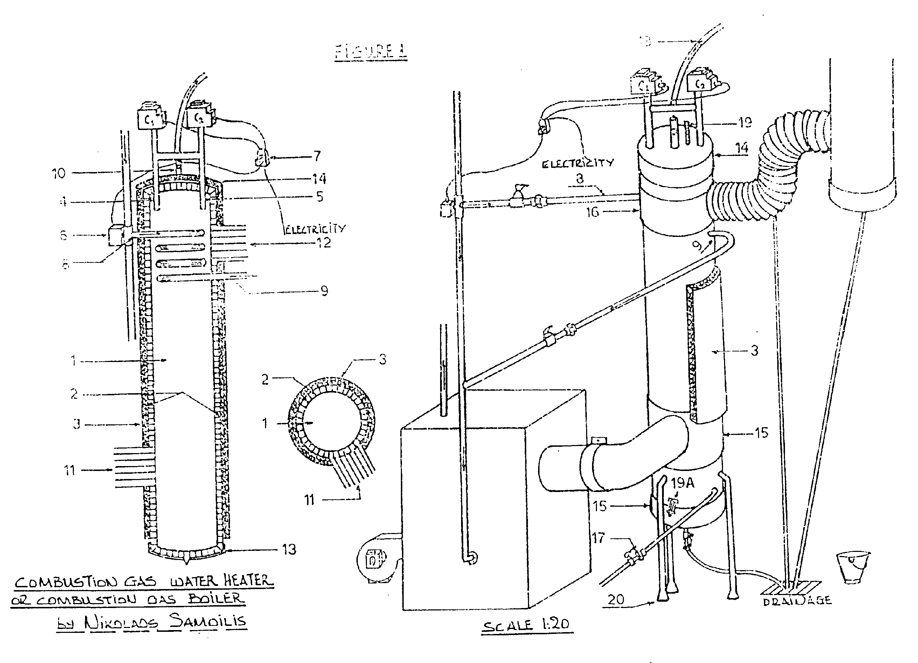

Figure 1 is a perpective view of the water heater for the exploitation of the combustion gas heat: it comprises two main parts :

The hot water tank and the save energy circuit through the return water of the boiler. Specifically, at the point of the exit of the boiler before the chimney the closed insulated water heater for combustion gas is inserted, into which a stainless tank is positioned; there in hot water production takes place.

Supplementary water for use is provided by the water supply network. On the top of the appliance there are two dipped thermostats, a 7 BAR relief valve and thermometer. The energy save circuit comprises a bronze coil positioned in the upper part of the water heater.

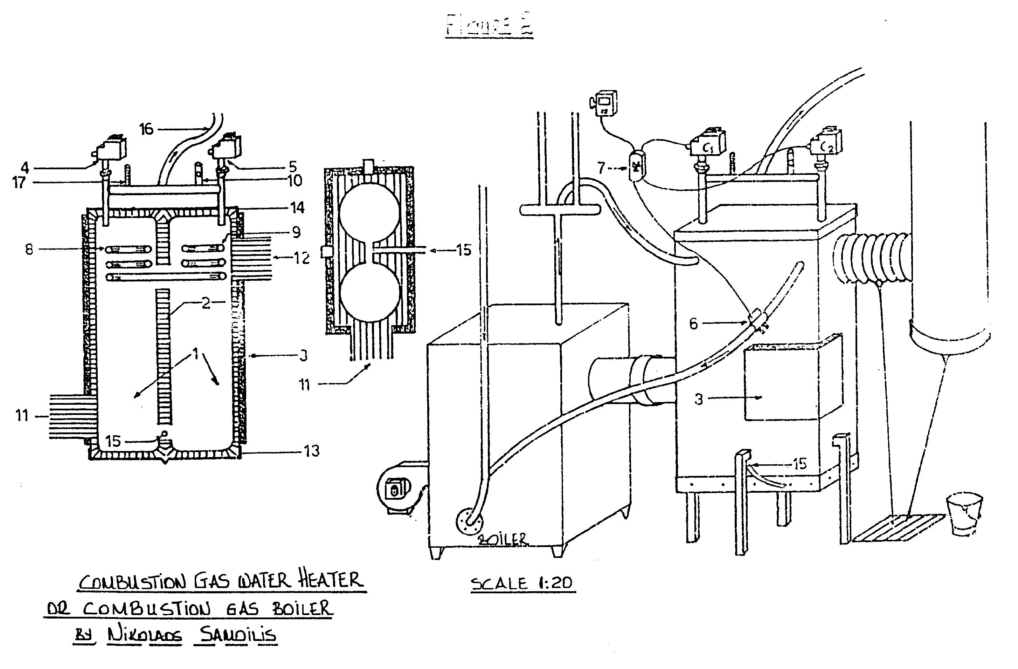

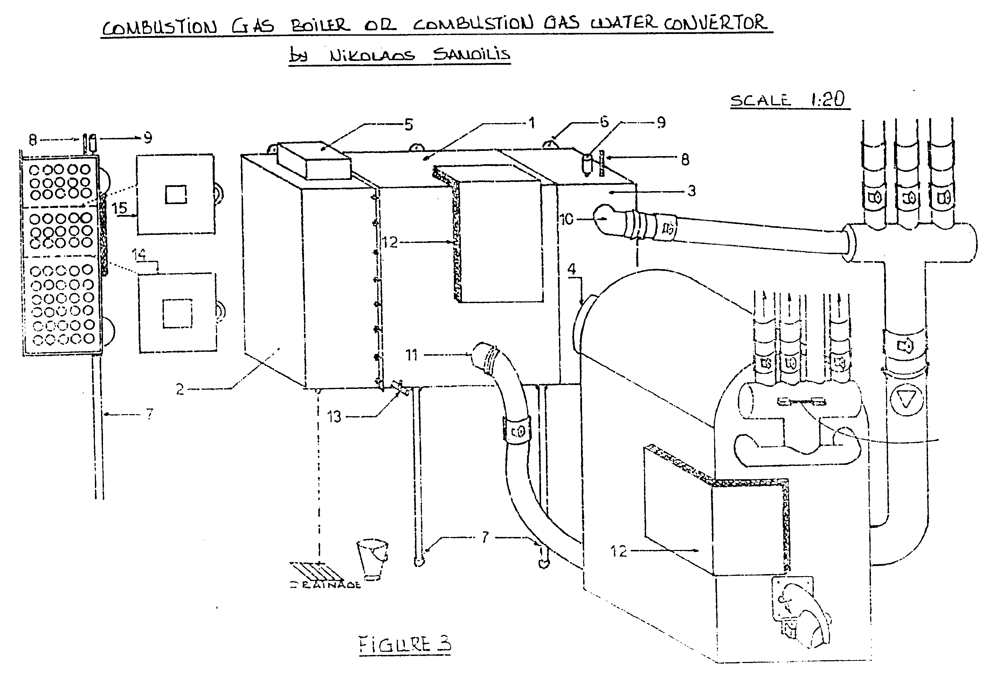

The appliance of figure 4 works in the same way as the one of figure 1 it only differs in thedimensions and shape. It comprises two stainless tanks, a larger coil, is easily adjustable to low roofed spaces.

In figure 3, the combustion gas boiler construction is made from steel and divided into three parts. In the first, the combustion gas is inserted through diaphragms of square section, and is distributed to the airpipes of the second and third parts. These diaphragms are made to be sliding and regulated after the proper distribution of the quantity of the gases. In the second part, the co-operation of the combustion gas with the water surrounding them takes place. If necessary, air-turbulence generators are positioned in the air-pipes. The water flows into this part of the appliance from the bottom through the return water of the boiler and comes out from the top or the opposite way, namely, inserted again in the return water of the boiler. In this way calories are much more easily replaced and energy save is achieved.

The third part serves as the smoke box of the appliance into which the combustion gas is inserted from the air-pipes before its exit by a flexible pipe through the chimney.

In figure 1, (1) is the space for the water heater, (2) the shell of the heater with a vacuum for the combustion gas flow (the space is shown with horizontal and vertical lines), (3) insulation, (4-5) dipped thermostats set to 80 and 60°C respectively, (6), two-way valve (7) relay, (8-9) entrance -exit of return water of the boiler (energy save mechanism), (10) safety valve, (11) combustion gas entrance and plate leading part of the combustion gas downwards, (12) exit of combustion gas, (13) lower lid and liquified combustion gas collector, (14) upper lid, (15-16) ring revolving on the shell of the water heater stabilized where necessary, (17) water-supply-network water entrance, (18) exit of water for use, (19a) lower lid mechanism able to replace the screws if desirable, (19) thermometer.

In figure 2 all accessories are those of figure 1; it only differs in the type, has two water tanks, a bigger coil and the energy save is achieved in the opposite sense to figure 1 way. Instead of the two-way valve (6) it has an electromagnetic valve.

In the boiler of figure 3, (1) is the combustion gas air-pipes and the water surrounding them, (2) cleaning door, (3) combustion gas space divided in three parts, (14-15) drawers regulating the combustion gas flow, (4) combustion gas entrance, (5) combustion gas exit, (6) three lifting hooks, (7) two support legs, (8) thermometer, (9) relief valve, (11) water return main entrance and (10) exit again to the return main or vice versa.

The water heater and the boiler for combustion gas can be made in several ways resulting, however, in the same work. The water heater, if it has more than two tanks, as that of figure 2 (1), needs to be provided with a separate circulator which will operate only during the energy save time. The coil construction can be substituted by other constructions which can delay less the circulation, such as a small tank in the shape of a small baking pan or a cylindral device with plates positioned in straight line. The return drawing is more easily achieved by means of a smaller curculator as well as constructions of other type as long as the heating surface is the required.

The entrance-exit pipe of any type of coil covers the calorie transfer as long as the pipe is of smaller diameter than the return main of the boiler water. The rotating ring of figure 1 (15-16) can be also fixed if connected to the flexible air-pipe from the boiler to the water heater and from the latter ot the chimney. The shell of the water heater is of one piece and can be dismantled. The space between the shell and the water heater tank of figures 1 and 2 (2) varies depending on the quantity of combustion gas to pass through.

A plate that will cover the space (2) is positioned in rotating position from the entrance of the combustion gas to the exit, it lengthens the course of the combustion gas as much as it is necessary in order for the combustion gas to leane its calories in the water heater but also without the rotating plate.

Into the boiler the combustion gas circulates outside the airpipes or in a zig-zag motion as many times as required. The combustion gas can circulate in the appliance in any way for the same work.The instruments (4-5-6-7) of figures 1 and 2 can be substituted by electronically operated or computerized ones.

The energy save redoubling is obtained when the water of the combustion gas water heater is more in quantity than the quantity for use. Thus, each time the heating is on, after the first time, the heater water does not start from zero degrees, as that of the boiler,in case the heating operation is made on a predetermined or a daily basis. The increase of the reduction of the pollution of the atmosphere beyond the energy save rate is due to the combustion gas devices which withhold fuel as well as other components which leave the boiler to the chimney.

Water heaters and boilers for combustion gas can by constructed in all sizes and forms for low pressure to steam pressure. The appliance can be made in a single or two pieces.

By the exit of each coil, a relief valve is positioned. When the combustion gas in the boiler flows out of the airpipes, metal heating collectors adjacent to the airpipes are positioned so that they pass on their heat during the off time of the boiler, thus reducing the liquefaction.

The above devices can be made of any metal of from alloys of any kind. Every accessory is available in the international market. Stainless metals are more resistant to condensate damage.

The use of metal sensitive to condensate requires special treatment with materials which will reinforce them, for example, enamel iron plate. There are epoxy components that form a surface on the metals similar to glass. Moreover, metals can be dipped into chemical fluids which give additional resistance than ordinary galvanization.

The copper pipe of the coil is coated before its positioning into the water heater so that it does not damage the water for use. The water heater can be called "Boiler " for combustion gas which will produce hot water besides the combustion gas and with the pipes toward the heating elements or the return mains of the heaters, which at the beginning it comsumes energy and offers it later. The entrance of the combustion gas in the appliances is made through each side.

The thickness of the iron plate for the water heater tanks as well as for other accessories starts from 3/10mm for low pressure and rises up to 50mm for high pressures. The pipes can be of F5 up to F2000 and unlimited length.

The water heaters for the exploitation of the heat of central heating combustion gas for the periods when the heater is operating for short periods and depending on the hot water needs, if there is no solar heater. The temperature of the heater water is supplemented with the use of electricity.

## Claims

1. Appliance for the exploitation of the combustion gas heat losses of a central heating boiler and the production of hot water for domestic and industrial use, as well as for the reduction of atmospheric pollutants and energy saving in the boiler, comprising a main internal space of the water heater (fig. 1) (1) or a water heater lower in height with two internal spaces destined for installation in lower height spaces wherein the supply network water flows, a shell wherein the combustion gases flow, insulation (3) that covers the shell characterized in that it has two thermostats (4-5), the one regulating the transfer of additional calories from the water heater to the boiler, the other interrupting the calorie transfer (of hot water) from the water heater to the boiler, a three way valve (6) through which the boiler water return is directed into the coil of the water heater, a relay (7) connected to the thermostats and to the three way valve (6) for regulating the operation thereof, coil water inlet and outlet (8-9), a relief valve (10), a plate by the entrance of the combustion gases (11) for deflecting part thereof to the lower part of the water heater, combustion gas outlet (12), lower lid-liquefied pollutant collector, upper lid (14), rotating rings (15-16) on the shell which facilitate the coupling of the combustion gas inlet and outlet to the water heater depending on the position of the boiler, cold water inlet (17), hot water outlet (18), thermometer (19), lower lid mounting (19a).

## Patentansprüche

1. Gerät zur Nutzung von Abwärme aus den Abgasen eines Zentralheizungskessels und zur Warmwasserbereitung für Haushalte und Industrie sowie zur Verminderung von Luftverschmutzung und zum Energiesparen im Heizkessel, der den Großteil des Raumes innerhalb des Warmwasserbereiters einnimmt (Zeichnung Nr. 1) (1) oder ein Warmwasserbereiter geringerer Höhe mit zwei Innenkammern der in niedrigen Räumen mit Netzwasserversorgung angebracht werden kann, ein Gehäuse, in dem die Abgase zirkulieren, Isoliermaterial (3), das das Gehäuse abdeckt, in dem sich zwei Thermostate befinden (4, 5), von denen einer den Übergang der überschüssigen Wärmeenergie vom Warmwasserbereiter auf den Heizkessel regelt, und der andere den Übergang von Wärmeenergie (des heißen Wassers) vom Warmwasserbereiter auf den Heizkessel unterbricht, ein T-Stück (6), durch die das Wasser aus dem Heizkessel hin zur Heizspirale des Warmwasserbereiters zurückgeleitet wird, ein Relais (7), das mit den Thermostaten und mit dem T-Stück verbunden ist, um deren Funktion zu regeln, Zu- und Abfluß (8, 9) des Wassers der Heizspirale, Sicherheitsventil (10), Blattfeder im Abgaseinlaß (11) zur Ableitung einew Teils der Abgase zum unteren Teil des Warmwasserbereiters, Abgasauslaß (12), unterer Deckel-Kollektor von flüssigen Schmutzstoffen (13), oberer Deckel (14), auf dem Gehäuse drehbarer Kranz (15, 16) für die Vereinfachung des Anschlusses des Abgasein- und - auslasses zum Warmwasserbereiter je nach Lage des Heizkessels, Kaltwassereinlaß (17), Warmwasserauslaß (18), Thermometer und Schließmechanismus des unteren Deckels (19a).

## Revendications

1. Appareil pour l'exploitation des pertes de chaleur par les gaz d'échappement de la chaudière du chauffage central et pour la production d'eau chaude à usage ménager et industriel ainsi que pour la limitation des déchêts atmosphèriques et l'économie d'énergie, à la chaudière qui comprend un espace intérieur principal du chauffe-eau (schéma 1) (1) ou un chauffe-eau plus petit en hauteur avec deux espaces intérieurs pour son installation dans des endroits de faible hauteur où coule l'eau du réseau, un revêtement où circule le gaz d'échappement, matériau d'isolation (3) qui couvre ce revêtement qui est caractérisé par le fait qu'il comprend deux thermostats (4,5), desquels l'un régule le transport de calories supplémentaires du chauffe-eau à la chaudière tandis que l'autre coupe le transport de calories (d'eau chaude) du chauffe-eau à la chaudière, une vanne à trois voies (6) par l'intermédiaire de laquelle le retour d'eau se dirige vers le serpentin du chauffe-eau, un relais (7) qui est relié aux thermostats et à la vanne à trois voies pour réguler leur fonctionnement, entrée-sortie (8,9) d'eau du serpentin, valve de sécurité (10), lame de direction placée à l'entrée des gaz d'échappement (11) pour la déviation d'une part de ceux-ci vers la partie inférieure du chauffe-eau, sortie de gaz (12), couvercle inférieur collecteur de déchêts liquéfiés (13), couvercle supérieur (14), couronne rotative autour du revêtement (15,16), pour faciliter la jonction de l'entrée et de la sortie des gaz d'échappement au chauffe-eau proportionnellement à la position de la chaudière, entrée d'eau froide (17), sortie d'eau chaude (18), thermomètre (19) et mécanisme du couvercle inférieur (19 a).
